# EUROPÄISCHE PATENTSCHRIFT

(11) **EP 2 560 904 B1**
(45) Veröffentlichungstag und Bekanntmachung des Hinweises auf die Patenterteilung: **08.04.2015**
(21) Anmeldenummer: 11703905.7
(22) Anmeldetag: 18.02.2011
(51) Int. Cl.: B65G 54/02

(54) **TRANSPORTVORRICHTUNG MIT GELENKIGEM FÖRDERELEMENT**
TRANSPORTING APPARATUS WITH ARTICULATED CONVEYING ELEMENT
DISPOSITIF DE TRANSPORT POURVU D'UN ÉLÉMENT DE TRANSPORT ARTICULÉ

(30) Priorität: 19.04.2010 DE 102010027925
(43) Veröffentlichungstag der Anmeldung: 27.02.2013
(73) Patentinhaber: Robert Bosch GmbH, 70442 Stuttgart (DE)
(72) Erfinder: LOECHT, Heinrich, 76461 Muggensturm (DE)
(86) Internationale Anmeldenummer: PCT/EP2011/052385
(87) Internationale Veröffentlichungsnummer: WO 2011/131385

(56) Entgegenhaltungen:
- EP-A1- 0 597 416
- EP-A1- 1 123 886
- EP-A2- 0 820 862
- EP-A2- 1 714 923
- EP-A2- 1 747 844
- WO-A1-2010/005300
- WO-A1-2010/108509
- WO-A2-03/047977
- DE-A1-102007 054 730
- DE-A1-102008 040 204
- DE-A1-102009 029 314
- GB-A- 1 350 715
- GB-A- 191 109 573
- US-A1- 2003 230 941
- US-A1- 2005 029 877
- US-B1- 6 876 896

## Beschreibung

### Stand der Technik

Die vorliegende Erfindung betrifft eine Transportvorrichtung mit einem gelenkigen Förderelement, insbesondere zur Förderung von Produkten für eine Beschickung von Verpackungsmaschinen.

Transportsysteme zur Förderung von Produkten, insbesondere zur Verwendung bei Verpackungsmaschinen, sind aus dem Stand der Technik in unterschiedlichen Ausgestaltungen bekannt. Derartige Transportsysteme sind z.B. aus der US 6,876,896 B1 und der US 5,225,725 B1 bekannt. Die Transportsysteme sollen dabei einen möglichst kompakten Aufbau aufweisen, wobei versucht wird, die ortsfeste, umlaufende Laufschiene, insbesondere im Kurvenbereich, mit einem möglichst kleinen Radius auszubilden. Um hierbei jedoch den Luftspalt zwischen dem bogenförmigen Primärteil und den auf einer ebenen Eisenrückschlussplatte am starren Förderelement befindlichen Permanentmagneten annähernd konstant zu halten, sind den Radien gewisse Grenzen gesetzt, so dass die bekannten Transportsysteme einen relativ großen Krümmungsradius und einen entsprechend großen Bauraum einnehmen. Ferner ergibt sich insbesondere im Kurvenbereich ein erhöhter Verschleiß durch Rutschbewegung der Laufrollen, was die Wartungsintervalle für die Transportsysteme verkürzt.

Ferner ist aus der EP 1 714 923 A2 eine Transportvorrichtung bekannt, welche eine umlaufende Kette zum Fördern von Produkten aufweist. Die einzelnen Kettenglieder sind gelenkig miteinander verbunden und werden linearmotorisch angetrieben. Ferner zeigt die DE 10 2008 040 204 A1 eine Transportvorrichtung mit einer Vielzahl von Förderelementen, welche in geradlinigen Bereichen mittels Linearmotor angetrieben werden, wobei in Kurvenbereichen kein Antrieb vorgesehen ist. In den Kurvenbereichen werden die Förderelemente durch Schieben nachfolgender Förderelemente oder Ziehen vorauseilender Förderelemente bewegt.

US 6,876,896 B1 beschreibt eine gattungsgemässe Transportvorrichtung.

### Offenbarung der Erfindung

Die erfindungsgemäße Transportvorrichtung zur Produktförderung mit den Merkmalen des Anspruchs 1 weist demgegenüber den Vorteil auf, dass sie insbesondere durch die Möglichkeit der Reduzierung der Radien an den Kurvenbereichen bei konstantem Luftspalt zwischen den bogenförmigen Primärteilen und den Permanentmagneten, einen sehr kompakten und kleinbauenden Aufbau aufweist. Dies wird erfindungsgemäß durch die Transportvorrichtung nach Anspruch 1 erreicht, wobei die Transportvorrichtung eine Vielzahl von unabhängig voneinander bewegbaren Förderelementen umfasst, welche wenigstens ein erstes und ein zweites Teilelement aufweisen, wobei die Teilelemente mittels eines Gelenks gelenkig miteinander verbunden sind. Hierdurch werden kleinere Kurvenradien ermöglicht, was zur oben erwähnten Bauraumeinsparung führt. Ferner ist durch die gelenkigen Förderelemente möglich, dass die Tragfähigkeit der Förderelemente durch die relativ große Anzahl von Laufrollen und einen größeren Laufrollenabstand der Förderelemente signifikant erhöht werden kann. Ein weiterer Vorteil der erfindungsgemäßen Förderelemente ist, dass eine spielfreie Führung der Förderelemente auch in Kurvenbereichen der Förderstrecke bzw. am Übergang zwischen Linearbereichen und Kurvenbereichen möglich ist. Weiterhin können durch die gelenkigen Förderelemente lineare Überdeckungsänderungen zwischen in der Förderstrecke angeordneten Spulen und am Förderelement angeordneten Permanentmagneten, welche eine Linearmotorantriebsvorrichtung bilden, erreicht werden. Hierdurch ergibt sich eine Vermeidung von Vorschubkraftverlusten und weiterhin ergibt sich keine Beschränkung der elektromagnetischen Vorschubkraft bei kleinen Umlenkradien. Es ist ein direkter Kraftfluss in Förderrichtung ohne zusätzliche Drehmomentbelastung möglich, so dass die Förderelemente mit hoher Dynamik umlaufen können. Erfindungsgemäß sind die Förderelemente modular aufgebaut, wobei einzelne Teilelemente einfach hinzugefügt bzw. weggelassen werden können. Hierdurch ergibt sich eine erhöhte Variabilität des Transportsystems und die Möglichkeit eines Baukastensystems für verschiedene Anwendungen und Kunden. Ferner ist eine Gelenkachse jedes Gelenks parallel zu einer Laufbahn einer Laufschiene.

Die Unteransprüche zeigen bevorzugte Weiterbildungen der Erfindung.

Besonders bevorzugt ist an jedem Teilelement eines Förderelements jeweils eine Laufrolle angeordnet. Hierdurch wird ein besonders stabiler und ruhiger Lauf der Förderelemente erreicht. Durch die Gelenkigkeit des Förderelements bleiben die Laufrollen ferner auch im Kurvenbereich immer in Kontakt mit der Schiene.

Weiter bevorzugt ist mindestens eine der Laufrollen an einer Gelenkachse zwischen zwei Teilelementen angeordnet. Hierdurch liegen eine Achse der Laufrolle und die Gelenkachse in einer gemeinsamen Achse, wodurch die Gelenkigkeit des Führungselements signifikant erhöht wird.

Gemäß einer weiteren bevorzugten Ausgestaltung der Erfindung umfasst die Transportvorrichtung eine Führungseinrichtung mit einer Führungsschiene an der Laufschiene und wenigstens einem Führungselement am Förderelement, insbesondere einer Führungsrolle. Hierdurch kann eine sichere Führung der Förderelemente realisiert werden. Besonders bevorzugt umfasst das Förderelement wenigstens drei Führungselemente, wobei ein Führungselement an einer ersten Seite der Führungsschiene und zwei Führungselemente an einer zweiten Seite der Führungsschiene für eine sichere Führung angeordnet sind.

Für ein möglichst stabiles Laufverhalten weist jedes Förderelement wenigstens eine erste Laufradgruppe und eine zweite Laufradgruppe auf. Die beiden Laufradgruppen sind dabei an einer ersten bzw. zweiten Seite des Förderelements angeordnet und geben dem Förderelement die notwendige Stabilität.

Weiter bevorzugt umfasst das Förderelement ein Kontaktelement, insbesondere einen vorstehenden Schiebefinger, für einen Kontakt mit den zu fördernden Produkten, der vorzugsweise austauschbar angeordnet ist. Somit kann das Produkt einfach und sicher gefördert werden und das Kontaktelement kann z.B. durch Austausch einfach auf verschiedene Produkte angepasst werden.

Ein besonders ruhiges und stabiles Laufverhalten ergibt sich, wenn das Förderelement vorzugsweise genau drei oder genau fünf Teilelemente aufweist. Aufgrund der kurzen axialen Baulänge in Förderrichtung sind insbesondere genau drei Teilelemente bevorzugt.

Eine besonders sichere Führung des Förderelements ergibt sich, wenn an jedem der Teilelemente wenigstens ein Führungselement, insbesondere eine Führungsrolle, angeordnet ist. Die Führung ist vorzugsweise als Mittenführung ausgebildet.

Gemäß einer weiteren bevorzugten Ausgestaltung der Erfindung sind die Permanentmagnete am Förderelement vorzugsweise quaderförmig ausgebildet. Dabei ist der Permanentmagnet vorzugsweise derart angeordnet, dass eine Gelenkachse der Gelenke und eine Ecke des Permanentmagnets auf einer Geraden liegen, d.h., die Gelenkachse verläuft genau in der Mitte zwischen den Permanentmagnetpaaren. Hierdurch kann im Kurvenbereich der Transportvorrichtung eine unzulässig große Abstandsänderung zwischen den Permanentmagneten und den in der Laufschiene angeordneten Spulen vermieden werden.

Weiter bevorzugt sind die Laufrollen der Förderelemente mit einer Kunststofflauffläche versehen und ballig ausgebildet. Hierdurch kann auf eine Schmierung der Laufrollen verzichtet werden und die Laufrollen sind insbesondere unempfindlich gegenüber gegebenenfalls vorhandenen Verunreinigungen auf der Laufschiene.

### Zeichnung

Nachfolgend werden bevorzugte Ausführungsbeispiele der Erfindung unter Bezugnahme auf die begleitende Zeichnung im Detail beschrieben. In der Zeichnung ist:
Figur 1 eine schematische, perspektivische Ansicht eines Förderelements auf einer Laufschiene gemäß einem ersten Ausführungsbeispiel der Erfindung,
Figur 2 eine schematische Vorderansicht des Förderelements,
Figur 3 eine schematische Draufsicht des Förderelements,
Figur 4 eine schematische Darstellung einer Kurvenfahrt des Förderelements,
Figur 5 eine perspektivische Darstellung einer Kurvenfahrt von Förderelementen,
Figur 6 eine perspektivische Darstellung eines Förderelements gemäß einem zweiten Ausführungsbeispiel der Erfindung, und
Figur 7 eine perspektivische Darstellung des Förderelements des zweiten Ausführungsbeispiels auf einer Laufschiene.

### Bevorzugte Ausführungsformen der Erfindung

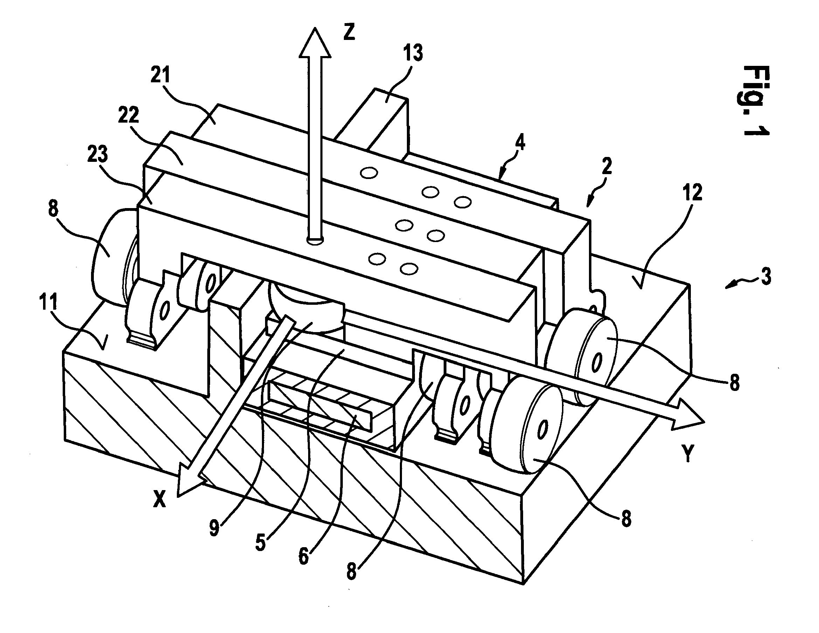

Nachfolgend wird unter Bezugnahme auf die Figuren 1 bis 5 eine Transportvorrichtung 1 gemäß einem ersten bevorzugten Ausführungsbeispiel der Erfindung im Detail beschrieben.

Wie aus Figur 1 ersichtlich ist, umfasst die Transportvorrichtung 1 ein Förderelement sowie eine in Figur 1 nur teilweise dargestellte, ortsfest und umlaufend vorgesehene Laufschiene 3. Die Laufschiene 3 weist einen Aufbau mit linearen Teilbereichen sowie Kurvenbereichen auf, so dass sich insgesamt eine ovalförmige Strecke ergibt. Weiterhin sind auch andere Laufbahnformen, z.B. winkelförmig, möglich, die sich aus modularen Linear- und Kurvenelementen zusammensetzen. Die Laufschiene 3 umfasst eine erste Laufbahn 11, eine zweite Laufbahn 12 sowie eine zwischen den beiden Laufbahnen angeordnete Führungsschiene 13. Ferner ist eine Linearmotorantriebsvorrichtung 4 vorgesehen, welche eine Vielzahl von in der Laufschiene 3 angeordneten Spulen 6 sowie am Förderelement 2 angeordneten Permanentmagnete 5 umfasst. Hierdurch kann eine Transportvorrichtung mit einer Vielzahl von unabhängig voneinander angetriebenen Förderelementen 2 realisiert werden. Dabei wird ein elektromagnetisches Wanderfeld mittels der Spulen 6 erzeugt, wobei die Förderelemente 2 über magnetische Kopplung den Wanderfeldern folgen und somit entlang der Laufschiene bewegt werden.

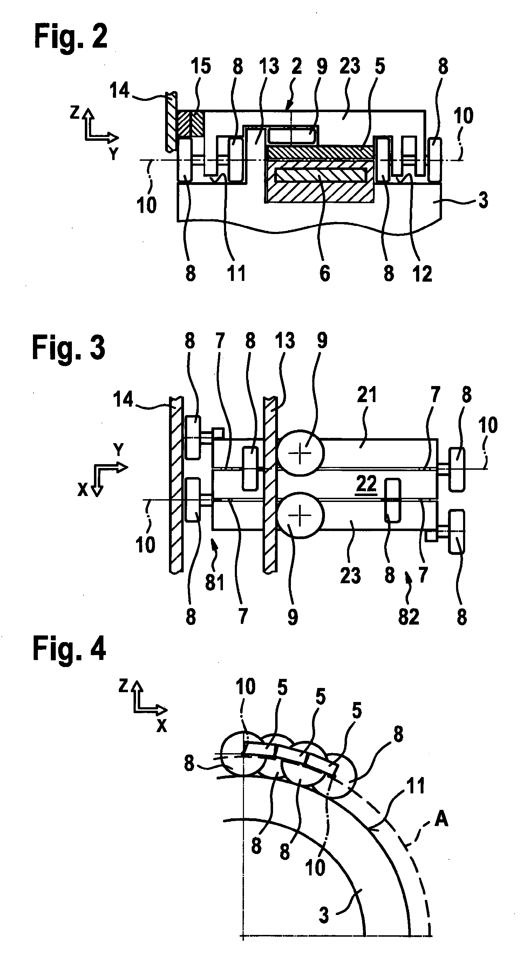

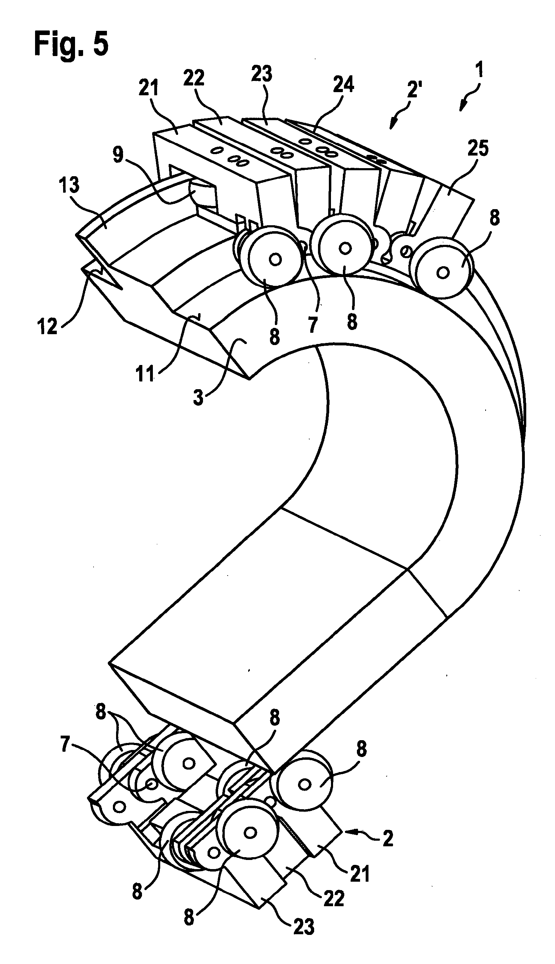

Das insbesondere aus Figur 1 ersichtliche Förderelement 2 umfasst ein erstes Teilelement 21, ein zweites Teilelement 22 und ein drittes Teilelement 23, wobei benachbarte Teilelemente jeweils miteinander mittels eines Gelenkes 7 (siehe Figur 3) gelenkig miteinander verbunden sind. Hierbei ist an jedem der Teilelemente 21, 22, 23 wenigstens eine Laufrolle 8 bzw. ein Permanentmagnet vorgesehen. Wie aus Figur 3 ersichtlich ist, bilden dabei die an einer ersten Seite der Führungsschiene 13 angeordneten Laufrollen 8 eine erste Laufrollengruppe 81 und die an einer zweiten Seite der Führungsschiene 13 angeordneten Laufrollen 8 bilden eine zweite Laufradgruppe 82. Wie aus Figur 1 ersichtlich ist, läuft die erste Laufradgruppe 81 auf der ersten Laufbahn 11 und die zweite Laufrollengruppe 82 läuft auf der zweiten Laufbahn 12. Wie weiter aus den Figuren 1, 2 und 3 ersichtlich ist, sind an den Förderelementen 2 zwei Führungsrollen 9 angeordnet, welche an der zweiten Seite der Führungsschiene 13 zur Führung des Förderelements 2 umlaufen. Wie insbesondere aus Figur 3 ersichtlich ist, sind Gelenkachsen 10, an denen die Teilelemente gelenkig miteinander verbunden sind, auch die Rotationsachsen der Laufrollen 8. Ein maximaler Schwenkwinkel der Teilelemente zueinander wird dabei durch die Laufrollen 8 beschränkt. Alternativ können auch Anschläge an den Teilelementen vorgesehen werden, welche das Verschwenken benachbarter Teilelemente zueinander beschränken. An der Oberseite des Förderelements 2 sind in den einzelnen Teilelementen 21, 22, 23 Schnittstellen vorgesehen, um Formatteile wie z.B. einen Schiebefinger, anzukoppeln. Die einzelnen Teilelemente 21, 22, 23 weisen dabei einen gleichen Grundaufbau auf, so dass eine beliebige Anzahl von Teilelementen miteinander verbunden werden kann. In diesem Ausführungsbeispiel ist in Figur 1 ein dreigliedriges Förderelement 2 gezeigt. In Figur 5 ist dabei neben dem dreigliedrigen Förderelement 2 auch ein fünfgliedriges Förderelement 2' dargestellt.

Seitlich der Laufschiene 3 ist ferner eine umlaufende Sensorplatine vorgesehen, welche mit einem zweiten Permanentmagneten 15 (vgl. Figur 2) in Wirkverbindung steht, um eine exakte Position des Förderelements 2 auf der Laufschiene 3 zu bestimmen.

Figur 4 zeigt den Übergang des Förderelements 2 von einem linearen Laufschienenbereich zu einer Kurve der Laufschiene 3. Aufgrund der gelenkigen Anordnung der Teilelemente 21, 22, 23 kann ein kleiner Radius der Kurve vorgesehen werden. Wie durch die gestrichelte Linie A angedeutet, bleibt dabei ein Abstand der Permanentmagnete 5 zu der in Reihe angeordneten Spulen 6 auch im Kurvenbereich konstant. Wie aus Figur 4 ersichtlich ist, sind dabei die Gelenkachsen 10, welche gleichzeitig auch die Achsen der Laufrollen 8 sind, in den Eckbereichen der Permanentmagnete 5 angeordnet. Durch diese Maßnahme kann der konstante Abstand auch im Kurvenbereich sichergestellt werden.

Durch das gelenkige Förderelement 2 können somit kleinere Kurvenradien realisiert werden, so dass ein gesamter Aufbau der Transportvorrichtung 1 viel kompakter als im Stand der Technik ist. Die Förderelemente 2 können dabei sehr kompakt aufgebaut sein. Insbesondere sind dabei Umlenkradien an den Kurven von 100 mm und kleiner möglich.

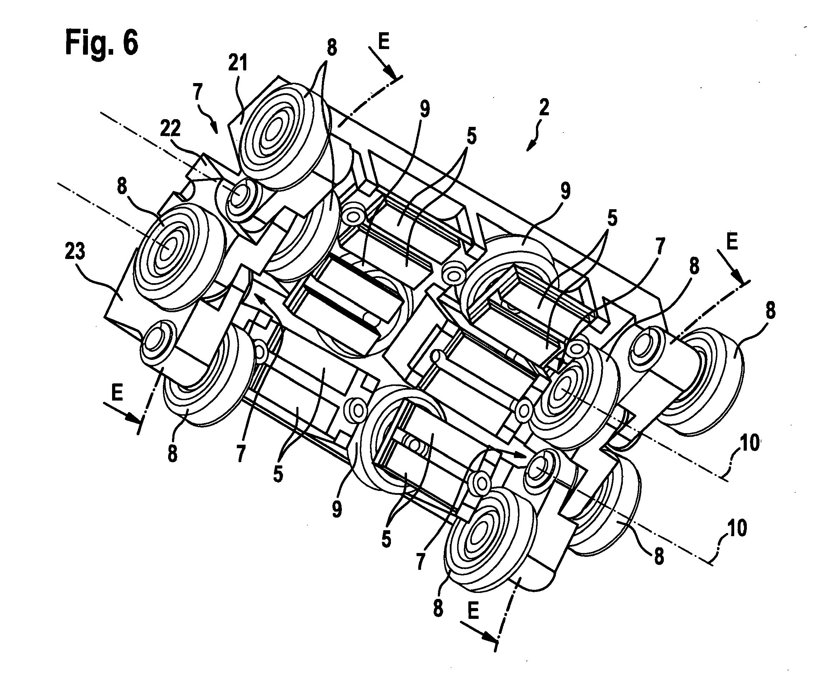

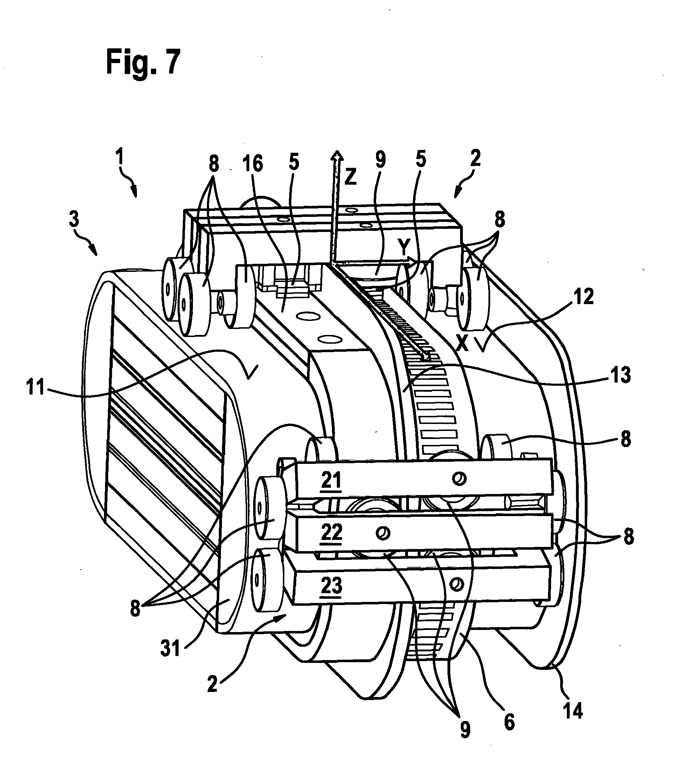

Die Figuren 6 und 7 zeigen eine Transportvorrichtung 1 gemäß einem zweiten Ausführungsbeispiel der Erfindung, wobei gleiche bzw. funktional gleiche Teile mit den gleichen Bezugszeichen wie im ersten Ausführungsbeispiel bezeichnet sind.

Das zweite Ausführungsbeispiel entspricht im Wesentlichen dem ersten Ausführungsbeispiel, wobei im Unterschied zum ersten Ausführungsbeispiel zusätzlich noch eine dritte Führungsrolle 9 am Förderelement 2 vorgesehen ist (siehe Figur 6). Hierbei sind die Führungsrollen 9 derart angeordnet, dass an einer Seite der Führungsschiene 13 eine Führungsrolle angeordnet ist und an der anderen Seite der Führungsschiene zwei Führungsrollen angeordnet sind. Hierdurch kann eine tragfähigere Mittenführung ermöglicht werden. Ferner umfasst das Förderelement 2 des zweiten Ausführungsbeispiels je Laufrollengruppe vier Laufrollen 8, wobei jeweils zwei Laufrollen 8 zu beiden Seiten einer Ebene E, in welcher die Gelenke 7 liegen, angeordnet sind.

Wie weiter aus Figur 7 ersichtlich ist, ist ferner eine umlaufende Stahlschiene 16 an der Laufschiene 3 angeordnet. Die Stahlschiene 16 ist vorgesehen, um eine Verstärkung der magnetischen Anzugskräfte für die einzelnen Förderelemente 2 zu ermöglichen. Die Stahlschiene 16 ist dabei, wie aus Figur 7 ersichtlich ist, an einer Seite der Führungsschiene 13 angeordnet, wobei an der anderen Seite der Führungsschiene 13 die Spulen 6 der Linearmotorantriebsvorrichtung 4 vorgesehen sind.

Die Laufschiene 3 ist ebenfalls modular aufgebaut und kann durch Vorsehen einer Vielzahl von Linearteilen in einer beliebigen Länge realisiert werden. Ferner können Kurventeile mit unterschiedlichen Radien vorgesehen sein, um so verschiedene Anforderungen, welche durch die Transportaufgabe vorgegeben werden, zu erfüllen.

Ansonsten entspricht dieses Ausführungsbeispiel dem ersten Ausführungsbeispiel, so dass auf die dort gegebene Beschreibung verwiesen werden kann.

## Patentansprüche

1. Transportvorrichtung zur Förderung eines Produkts, umfassend
- eine Vielzahl von unabhängig voneinander bewegbaren Förderelementen (2) zum Fördern von Produkten,
- eine ortsfeste, umlaufend angeordnete Laufschiene (3), welche einen Laufpfad mit wenigstens einer Laufbahn (11) für das Förderelement (2) definiert, und
- eine Linearmotorantriebsvorrichtung (4) zum Antreiben der Förderelemente (2),
- wobei jedes Förderelement (2) Permanentmagnete (5) aufweist, die mit Spulen (6) der Linearmotorantriebsvorrichtung (4) in Wirkverbindung stehen, und
- wobei jedes Förderelement (2) wenigstens ein erstes Teilelement (22) und ein zweites Teilelement (23) aufweist, welche mittels eines Gelenkes (7) gelenkig miteinander verbunden sind, **dadurch gekennzeichnet, dass**
- jedes Förderelement einen modularen Aufbau aufweist und die einzelnen Teilelemente (22, 23) einen gleichen Grundaufbau aufweisen, und dass
- eine Gelenkachse (10) jedes Gelenks (7) parallel zur Laufbahn (11) ist.

2. Transportvorrichtung nach Anspruch 1, **dadurch gekennzeichnet, dass** an jedem Teilelement (21, 22, 23) wenigstens eine Laufrolle (8) angeordnet ist.

3. Transportvorrichtung nach einem der vorhergehenden Ansprüche, **dadurch gekennzeichnet, dass** wenigstens eine Laufrolle (8) in einer Gelenkachse (10) des Gelenks (7) angeordnet ist.

4. Transportvorrichtung nach einem der vorhergehenden Ansprüche, ferner umfassend eine Führungseinrichtung mit einer Führungsschiene (13) an der Laufschiene und wenigstens einem Führungselement (9) an jedem Förderelement, insbesondere einer Führungsrolle.

5. Transportvorrichtung nach Anspruch 4, **dadurch gekennzeichnet, dass** die Führungseinrichtung wenigstens drei Führungselemente (9) aufweist, wobei ein Führungselement an einer ersten Seite der Führungsschiene (13) angeordnet ist und zwei Führungselemente an einer zweiten Seite der Führungsschiene angeordnet sind.

6. Transportvorrichtung nach Anspruch 4 oder 5, **dadurch gekennzeichnet, dass** jedes Förderelement (2) eine erste Laufrollengruppe (81) und zweite Laufrollengruppe (82) aufweist, wobei die erste Laufrollengruppe (81) an einer ersten Seite des Förderelements (2) angeordnet ist und die zweite Laufrollengruppe (82) an einer zweiten Seite des Förderelements angeordnet ist.

7. Transportvorrichtung nach einem der vorhergehenden Ansprüche, **dadurch gekennzeichnet, dass** jedes Förderelement (2) ein Kontaktelement, insbesondere einen senkrecht nach oben vorstehenden Schiebefinger, für einen Kontakt mit dem zu fördernden Produkt aufweist.

8. Transportvorrichtung nach einem der vorhergehenden Ansprüche, **dadurch gekennzeichnet, dass** jedes Förderelement eine ungerade Anzahl von Teilelementen, insbesondere genau drei Teilelemente oder genau fünf Teilelemente, aufweist.

9. Transportvorrichtung nach einem der Ansprüche 4 bis 8, **dadurch gekennzeichnet, dass** an jedem Teilelement (21, 22, 23) ein Führungselement (9) angeordnet ist.

10. Transportvorrichtung nach einem der vorhergehenden Ansprüche, **dadurch gekennzeichnet, dass** die Permanentmagnete am Förderelement (2) quaderförmig mit Ecken ausgebildet sind und die Gelenkachsen (10) der Gelenke (7) durch wenigstens eine Ecke der Permanentmagnete (5), vorzugsweise durch zwei Ecken der Permanentmagnete, verlaufen.

## Claims

1. Transporting apparatus for conveying a product, said transporting apparatus comprising
- a plurality of conveying elements (2) for conveying products, said conveying elements being movable independently of one another,
- a fixed running rail (3) which is arranged in a peripheral manner and defines a running path having at least one running track (11) for the conveying element (2), and
- a linear motor driving device (4) for driving the conveying elements (2),
- wherein each conveying element (2) has permanent magnets (5) which are in operative connection with coils (6) of the linear motor driving device (4), and
- wherein each conveying element (2) has at least one first part element (22) and one second part element (23), which are connected to one another in an articulated manner by means of an articulation (7), **characterized in that**
- each conveying element has a modular design and the individual part elements (22, 23) have an identical basic design, and **in that**
- an articulated axis (10) of each articulation (7) is in parallel with the running track (11).

2. Transporting apparatus according to Claim 1, **characterized in that** at least one running roller (8) is arranged on each part element (21, 22, 23).

3. Transporting apparatus according to one of the preceding claims, **characterized in that** at least one running roller (8) is arranged in an articulated axis (10) of the articulation (7).

4. Transporting apparatus according to one of the preceding claims, additionally comprising a guide device with a guide rail (13) on the running rail and at least one guide element (9) on each conveying element, in particular a guide roller.

5. Transporting apparatus according to Claim 4, **characterized in that** the guide device has at least three guide elements (9), wherein one guide element is arranged on a first side of the guide rail (13) and two guide elements are arranged on a second side of the guide rail.

6. Transporting apparatus according to Claim 4 or 5, **characterized in that** each conveying element (2) has a first running roller group (81) and second running roller group (82), wherein the first running roller group (81) is arranged on a first side of the conveying element (2) and the second running roller group (82) is arranged on a second side of the conveying element.

7. Transporting apparatus according to one of the preceding claims, **characterized in that** each conveying element (2) has a contact element, in particular a pusher finger which protrudes vertically upward, for contact with the product to be conveyed.

8. Transporting apparatus according to one of the preceding claims, **characterized in that** each conveying element has an uneven number of part elements, in particular precisely three part elements or precisely five part elements.

9. Transporting apparatus according to one of Claims 4 to 8, **characterized in that** one guide element (9) is arranged on each part element (21, 22, 23).

10. Transporting apparatus according to one of the preceding claims, **characterized in that** the permanent magnets on the conveying element (2) are realized in the form of a cuboid with corners and the articulated axes (10) of the articulations (7) extend through at least one corner of the permanent magnets (5), preferably through two corners of the permanent magnets.

## Revendications

1. Dispositif de transport pour le transport d'un produit, comportant
- une pluralité d'éléments de transport (2) déplaçables indépendamment les uns des autres pour transporter des produits,
- un rail de roulement (3) fixe disposé de manière périphérique, lequel définit un trajet de roulement comprenant au moins un chemin de roulement (11) pour l'élément de transport (2), et
- un dispositif d'entraînement par moteur linéaire (4) pour entraîner les éléments de transport (2),
- chaque élément de transport (2) comprenant des aimants permanents (5) qui sont en liaison fonctionnelle avec des bobines (6) du dispositif d'entraînement à moteur linéaire (4), et
- chaque élément de transport (2) comprenant au moins un premier élément partiel (22) et un deuxième élément partiel (23), lesquels sont reliés les uns aux autres de manière articulée au moyen d'une articulation (7), **caractérisé en ce que**
- chaque élément de transport présente une structure modulaire et les éléments partiels individuels (22, 23) présentent une structure de base identique, et **en ce que**
- un axe d'articulation (10) de chaque articulation (7) est parallèle au chemin de roulement (11).

2. Dispositif de transport selon la revendication 1, **caractérisé en ce qu'**au moins un galet de roulement (8) est disposé sur chaque élément partiel (21, 22, 23).

3. Dispositif de transport selon l'une quelconque des revendications précédentes, **caractérisé en ce qu'**au moins un galet de roulement (8) est disposé dans un axe d'articulation (10) de l'articulation (7) .

4. Dispositif de transport selon l'une quelconque des revendications précédentes, comportant en outre un dispositif de guidage pourvu d'un rail de guidage (13) sur le rail de roulement et d'au moins un élément de guidage (9) sur chaque élément de transport, en particulier d'un galet de guidage.

5. Dispositif de transport selon la revendication 4, **caractérisé en ce que** le dispositif de guidage comprend au moins trois éléments de guidage (9), un élément de guidage étant disposé sur un premier côté du rail de guidage (13) et deux éléments de guidage étant disposés sur un deuxième côté du rail de guidage.

6. Dispositif de transport selon la revendication 4 ou 5, **caractérisé en ce que** chaque élément de transport (2) comprend un premier groupe de galets de roulement (81) et un deuxième groupe de galets de roulement (82), le premier groupe de galets de roulement (81) étant disposé sur un premier côté de l'élément de transport (2) et le deuxième groupe de galets de roulement (82) étant disposé sur un deuxième côté de l'élément de transport.

7. Dispositif de transport selon l'une quelconque des revendications précédentes, **caractérisé en ce que** chaque élément de transport (2) comprend un élément de contact, en particulier un doigt de poussée faisant saillie verticalement vers le haut, pour un contact avec le produit à transporter.

8. Dispositif de transport selon l'une quelconque des revendications précédentes, **caractérisé en ce que** chaque élément de transport comprend un nombre impair d'éléments partiels, en particulier exactement trois éléments partiels ou exactement cinq éléments partiels.

9. Dispositif de transport selon l'une quelconque des revendications 4 à 8, **caractérisé en ce qu'**un élément de guidage (9) est disposé sur chaque élément partiel (21, 22, 23).

10. Dispositif de transport selon l'une quelconque des revendications précédentes, **caractérisé en ce que** les aimants permanents sur l'élément de transport (2) sont réalisés de manière parallélépipédique avec des coins et les axes d'articulation (10) des articulations (7) passent par au moins un coin des aimants permanents (5), de préférence par deux coins des aimants permanents.
